(19)

Europäisches Patentamt
European Patent Office
Office européen des brevets

(11) **EP 2 620 742 B1**

(12) **EUROPÄISCHE PATENTSCHRIFT**

(45) Veröffentlichungstag und Bekanntmachung des Hinweises auf die Patenterteilung:
**12.03.2014 Patentblatt 2014/11**

(51) Int Cl.:
***G01B 9/02*** *(2006.01)*

(21) Anmeldenummer: **12000514.5**

(22) Anmeldetag: **26.01.2012**

(54) **Verfahren zur absoluten Längenmessung und Längenmessvorrichtung**

Method for absolute length measurements and length measurement device

Procédé de mesure des longueurs absolues et dispositif de mesure des longueurs

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.07.2013 Patentblatt 2013/31**

(73) Patentinhaber: **Bundesrepublik Deutschland, vertreten durch das Bundesministerium für Wirtschaft und Technologie, dieses vertreten durch den Präsidenten der 38116 Braunschweig (DE)**

(72) Erfinder:
• **Meiners-Hagen, Karl**
  **38100 Braunschweig (DE)**
• **Pollinger, Florian**
  **38106 Braunschweig (DE)**

(74) Vertreter: **Plöger, Jan Manfred et al**
**Gramm, Lins & Partner GbR**
**Theodor-Heuss-Strasse 1**
**38122 Braunschweig (DE)**

(56) Entgegenhaltungen:
**JP-A- 2008 051 674**

• **I. CODDINGTON, W. C. SWANN, L. NENADOVIC, N. R. NEWBURY: "Rapid and precise absolute distance measurements at long range", NATURE PHOTONICS, Bd. 3, 24. Mai 2009 (2009-05-24), - 6. Februar 2000 (2000-02-06), Seiten 351-356, XP002675765, DOI: 10.1038/NPHOTON.2009.94**
• **SHUKO YOKOYAMA ET AL: "A distance meter using a terahertz intermode beat in an optical frequency comb", OPTICS EXPRESS, Bd. 17, Nr. 20, 28. September 2009 (2009-09-28), Seite 17324, XP55026943, ISSN: 1094-4087, DOI: 10.1364/OE. 17.017324**
• **NICOLAE R DOLOCA ET AL: "Absolute distance measurement system using a femtosecond laser as a modulator;Absolute distance measurement system using a fs laser as a modulator", MEASUREMENT SCIENCE AND TECHNOLOGY, IOP, BRISTOL, GB, Bd. 21, Nr. 11, 24. September 2010 (2010-09-24), Seite 115302, XP020199889, ISSN: 0957-0233, DOI: 10.1088/0957-0233/21/11/115302**

**Beschreibung**

Die Erfindung betrifft ein Verfahren zur Längenmessvorrichtung, insbesondere zur absoluten Längenmessung.

Gemäß einem zweiten Aspekt betrifft die Erfindung eine Absolut-Längenmessvorrichtung mit (a) einer Lichtquelle zum Erzeugen eines ersten Strahls und zumindest eines zweiten Strahls (b) einer Frequenzversatz-Erzeugungsvorrichtung zum Erzeugen eines von null verschiedenen Frequenzversatzes zwischen den beiden Strahlen, (c) einer ersten Messstrecke, in der beim Betrieb der Absolut-Längenmessvorrichtung zumindest ein Teil zumindest eines der Strahlen läuft und (d) zumindest einem Detektor, der so angeordnet ist, dass auf ihm der erste und der zweite Strahl interferieren, so dass mindestens ein Schwebungssignal entsteht, anhand dessen eine absolute Länge der Messstrecke ermittelbar ist.

Es existieren absolut messende und relativ messende Längenmesssysteme. Während relativ messende Längenmesssysteme, beispielsweise in Form von Laserinterferometern, hohe Genauigkeiten erzielen und vergleichsweise einfach aufgebaut und daher kostengünstig sind, sind absolut messende Längenmesssysteme entweder sehr aufwendig oder im Vergleich zu relativ messenden Systemen deutlich ungenauer.

Aus dem Artikel "Rapid and precise absolute distance measurements at long range" von Coddington et al, Nature Photonics, Vol. 3, Juni 2009, ist ein Verfahren bekannt, bei dem eine Laufzeitmessung mit einem interferometrischen Verfahren kombiniert wird. Es findet sich kein Hinweis auf das selektive Herausfiltern von Kammlinien des Frequenzkamms.

Aus dem Artikel "A distance meter using a terahertz intermode beat in an optical frequency comb" von Yokoyama et al, Optics Express, Vol. 17, 20, 28.09.2009, ist bekannt, die optischen Frequenzen von zwei Frequenzkämmen, die leicht gegeneinander verschoben sind, mittels eines nicht-linearen Kristalls so zu mischen, dass ein Radiofrequenz-Signal entsteht. Anhand des Radiofrequenz-Signals kann eine absolute Länge bestimmt werden. Nachteilig an diesem Verfahren ist, dass zwei Frequenzkammlaser verwendet werden müssen.

Der Erfindung liegt die Aufgabe zugrunde, ein vergleichsweise einfach aufgebautes, zur absoluten Längenmessung geeignetes Längenmessgerät vorzuschlagen, das eine hohe Messgenauigkeit erzielt.

Die Erfindung löst das Problem durch ein Verfahren zur Längenmessung, insbesondere zur absoluten Längenmessung, mit den Schritten (a) Erzeugen eines Frequenzkamms, der als aus einer Mehrzahl äquidistanter Kammlinien bestehend beschreibbar ist, danach (b) Herausfiltern jeder n-ten Kammlinie aus dem Frequenzkamm, so dass ein erster Strahl entsteht, und (c) Herausfiltern jeder m-ten Kammlinie aus dem Frequenzkamm, so dass ein zweiter Strahl entsteht, (d) Erzeugen eines von null verschiedenen Frequenzversatzes zwischen beiden Strahlen, (e) Senden zumindest eines Teils zumindest eines der Strahlen auf eine Messstrecke, (f) Interferieren-Lassen des ersten Strahls und des zweiten Strahls, so dass mindestens ein Schwebungssignal entsteht, und (g) Berechnen der absoluten Länge aus dem mindestens einen Schwebungssignal.

Vorteilhaft an der Erfindung ist, dass als Lichtquelle lediglich ein Femtosekundenlaser benötigt wird. Bisherige Mehrwellenlängen-Interferometer benötigen eine Vielzahl von gegebenenfalls aufeinander abgestimmten optischen Wellenlängen, die durch eine Vielzahl an Lichtquellen realisiert werden muss. Das lässt den Aufbau komplex werden. Femtosekundenlaser sind hingegen einfach aufgebaut.

Vorteilhaft ist zudem, dass Genauigkeiten erreichbar sind, die bislang nur mit relativ messenden Längenmesssystemen erreicht werden konnten. Die Erfindung ermöglicht beispielsweise, ein Koordinatenmessgerät mit einem erfindungsgemäßen Längenmessgerät auszustatten und so direkt höchste Messgenauigkeiten zu erzielen. Bisher verwendete Messsysteme sind entbehrlich.

Es ist zudem möglich, das erfindungsgemäße Längenmesssystem in Werkzeugmaschinen oder Mask-Alinern bei der Chipfertigung einzusetzen, wo es auf höchste Genauigkeiten ankommt. Ein weiterer Vorteil der Erfindung ist, dass sie mit wenigen Bauteilen auskommt und daher sehr robust ist.

Beispielsweise verläuft die Messstrecke zu einem Retroreflektor und zurück. Das erfindungsgemäße Längenmesssystem kann Teil eines Laser-Trackers oder Laser-Tracers sein. In anderen Worten kann der Retroreflektor automatisch im Raum und/oder in der Ebene positionierbar sein. Insbesondere umfasst die Absolut-Längenmessvorrichtung eine Reflektor-Positioniervorrichtung zum Positionieren des Retroreflektors im Raum und/oder in einer Ebene und eine Nachführvorrichtung zum Nachführen des Laserstrahls, so dass die Messstrecke stets zum Retroreflektor verläuft.

Gemäß einem zweiten Aspekt löst die Erfindung das Problem durch eine gattungsgemäße Absolut-Längenmessvorrichtung, bei der die Lichtquelle (i) eine Frequenzkammerzeugungsvorrichtung zum Abgeben eines Frequenzkamms, der als aus einer Mehrzahl äquidistanter Kammlinien bestehend beschreibbar ist, (ii) eine erste Frequenzkamm-Filtervorrichtung zum Herausfiltern jeder n-ten Kammlinie aus dem Frequenzkamm, so dass ein erster Strahl entsteht, und (iii) eine zweite Frequenzkamm-Filtervorrichtung zum Herausfiltern jeder m-ten Kammlinie aus dem Frequenzkamm, so dass ein zweiter Strahl entsteht, umfasst.

Im Folgenden wird die Erfindung anhand einer Ausführungsform näher erläutert. Die im Verlauf der Herleitung gemachten Annahmen zu den Parametern sind nicht als Einschränkungen des allgemeinen Erfindungsgedankens, sondern lediglich als vorteilhafte Ausgestaltungen zu verstehen.

Schritt (a): .

Zunächst wird ein Frequenzkamm erzeugt. Ein Frequenzkamm kann als ein Laserstrahl betrachtet werden, der Licht in Form kurzer Pulse fester Breite und fester Wiederholrate emittiert. Ein Frequenzkamm kann beschrieben werden als aus einer Summe an Kammfrequenzen bestehend. Die Frequenz $\nu_k$ der k-ten Kammlinie ist

$$\nu_k = f_{CEO} + k\, f_{rep} \,.$$ Formel 1

k ist ein Laufindex aus natürlichen Zahlen. Da der Frequenzkamm eine Einhüllende besitzt, beginnt k nicht bei null, sondern bei einer größeren natürlichen Zahl.

Schritt (b):

Aus dem Frequenzkamm wird nun jede n-te Kammlinie herausgefiltert, so dass ein erster Strahl $S_1$ entsteht. Der erste Strahl $S_1$ hat dann die folgenden Frequenzanteile

$$\nu_{S1,k1} = f_{CEO} + k_1\, n\, f_{rep}$$ Formel 2

Dabei ist n eine feste natürliche Zahl und $k_1$ ist ein Laufindex $k_1 = 0, 1, 2, ....$ Zum Herausfiltern wird beispielsweise ein Etalon verwendet, das auf eine erste Resonanzfrequenz $f_{cav,1}$ mit

$$f_{cav,1} = n\, f_{rep}$$ Formel 3

stabilisiert ist.

Schritt (c):

Aus dem Frequenzkamm wird zudem jede m-te Kammlinie herausgefiltert, so dass ein zweiter Strahl $S_2$ entsteht. Der zweite Strahl $S_2$ hat dann die folgenden Frequenzanteile

$$\nu_{S2,k2} = f_{CEO} + k_2\, m\, f_{rep}$$ Formel 4

Dabei ist m $\neq$ n eine feste natürliche Zahl und $k_2$ ein Laufindex $k_2 = 0, 1, 2, ....$ Der Einfachheit halber (und ohne Beschränkung der Allgemeinheit) sind n und m teilerfremd. Zum Herausfiltern wird beispielsweise ein Etalon verwendet, das auf eine zweite Resonanzfrequenz $f_{cav,2}$ mit

$$f_{cav,2} = m\, f_{rep}$$ Formel 5

stabilisiert wird.

Schritt (d):

Es wird zudem ein Frequenzversatz $\Delta f_{AOM}$ zwischen beiden Strahlen erzeugt. Der Frequenzversatz $\Delta f_{AOM}$ kann direkt von einem AOM erzeugt werden. Möglich ist auch, dass ein erster AOM für den ersten Strahl $S_1$ einen Frequenzversatz $f_{A-OM,1}$ erzeugt, so dass der erste Strahl $S_1$ dann die folgenden Frequenzanteile hat:

$$\nu_{S1,k1} = f_{CEO} + k_1\, n\, f_{rep} + f_{AOM,1}$$ Formel 6

Im Beispiel wird auf den zweiten Strahl $S_1$ eine zweite Modulationsfrequenz $f_{AOM,2}$ aufmoduliert, so dass der zweite Strahl $S_1$ dann die folgenden Frequenzanteile hat:

$$\nu_{S2,k2} = f_{CEO} + k_2 m f_{rep} + f_{AOM,2} \qquad \text{Formel 7}$$

Es ergibt sich der Frequenzversatz $\Delta f_{AOM}$

$$\Delta f_{AOM} = f_{AOM,2} - f_{AOM,1} \qquad \text{Formel 8}$$

Schritt (e):

Zumindest ein Teilstrahl zumindest eines der Strahlen, beispielsweise $S_1$, wird auf eine Messstrecke der Messstreckenlänge L geschickt. Unter der Messstrecke wird eine Strecke verstanden, die zumindest der eine Strahl durchläuft und die sich ändert, wenn sich die zu messende Länge verändert. Beispielsweise verläuft die Messstrecke zu einem Retroreflektor und zurück.

Ändert sich die Länge der Messstrecke, so verändert sich die Phase des Lichts im Strahl, der die Messstrecke durchlaufen hat. Das führt, wie weiter unten berechnet wird, zu einer Vielzahl an Interferenzeffekten.

Das Senden zumindest des Teilstrahls eines der Strahlen auf eine Messstrecke erfolgt insbesondere so, dass die Messstrecke Teil eines Heterodyn-Interferometers ist, in dem die Strahlen $S_1$, $S_2$ laufen. Im Folgenden wird ein Heterodyn-Aufbau zugrunde gelegt, auch ein Homodyn-Aufbau ist aber erfindungsgemäß.

Beispielsweise durchläuft ein Teilstrahl $S_1^R$ des ersten Strahls $S_1$ eine erste Referenzstrecke der Länge $z_1^R$ und ein Teilstrahl $S_2^R$ des zweiten Strahls $S_2$ durchläuft eine zweite Referenzstrecke der Länge $z_2^R$. Der hochgestellte Index R steht für die Referenzstrecke. Diese beiden Strahlen interferieren im Strahlteiler 30 (siehe unten).

Der verbleibende Teilstrahl $S_1^M$ des Strahls $S_1$ wird auf die Messstrecke der Messstreckenlänge L gegeben. Er durchläuft dabei den optischen Weg $z_1^M$, bevor er mit dem Referenzsignal, das zuvor den festen optischen Weg $S_2^M$ durchlaufen hat, interferiert. Der hochgestellte Index M steht für Messstrecke.

Schritt (f):

Die jeweils interferierenden Strahlen werden auf Detektoren (36, 64) geleitet, wo sie ein Mess- bzw. Referenzsignal in Form eines elektrischen Signals generieren.

Da beide Strahlen eine Vielzahl an Frequenzen umfassen, entsteht ein Schwebungssignal, das ebenfalls eine Vielzahl an Frequenzen enthält.

$$f_{Schwebung} = \left| \nu_{S1} - \nu_{S2} \right| \text{ liefert} \qquad \text{Formel 9}$$

$$\begin{aligned} f_{Schwebung} &= \left| f_{CEO} + k_1 n f_{rep} + f_{AOM,1} - \left( f_{CEO} + k_2 m f_{rep} + f_{AOM,2} \right) \right| \qquad \text{Formel 10} \\ &= \left| f_{rep} \left( k_1 n - k_2 m \right) - \Delta f_{AOM} \right| \end{aligned}$$

durch Einsetzen von Formel 6 und Formel 7.

Das Interferieren-Lassen wird vorzugsweise so durchgeführt, dass die Teilstrahlen, die die Referenzstrecken durchlaufen haben (hier: $S_1^R$, $S_2^R$), auf einem Referenzdetektor und dass der Teilstrahl $S_1^M$ mit einem anderen Teilstrahl in einem Strahlteiler (beispielsweise im Strahlteiler 58, siehe unten) zur Interferenz gebracht werden.

Sowohl auf den Referenz- als auch auf den Messdetektoren liegen nun alle Interferenzsignale der optischen Frequenzen der Kämme an. Das elektrische Feld $E_{S_j}$ (j = 1,2) eines Frequenzkamms lässt sich beschreiben durch die Superposition der Feldstärken $E_{S_j,k_j}(\nu_{S_j,k_j},z,t)$ der einzelnen Kammmoden:

$$E_{S_j}(z,t) = \sum_{k_j} E_{S_j,k_j}(\nu_{S_j,k_j},z,t) \qquad \text{Formel 11}$$

Durchläuft der Strahl $S_j$ die Strecke $z_j$, so lassen sich die einzelnen Amplituden in der komplexen Zahlenebene beschreiben durch

$$E_{S_j}(\nu_{S_j,k_j},z,t) = E_{S_j,k_j}^0 \exp\left(-i\left(\tilde{\varphi}_{S_j,k_j}(z_j,t) - 2\pi\nu_{S_j,k_j}t\right)\right) \qquad \text{Formel 12}$$

Der Phasenterm $\tilde{\varphi}_{S_j,k_j}(z_j, t)$ $(z_j, t)$ setzt sich zusammen aus zeitabhängigen Störungen und einem vom optischen Weg $z_j$ und der Frequenz $\nu_{S_j,k_j}$ des entsprechenden Strahls $S_j$ abhängigen Phasenterm

$$\varphi_{S_j,k_j}(z_j) = \frac{2\pi\nu_{S_j,k_j}}{c}z_j := K_j z_j \qquad \text{Formel 13}$$

Es gilt also

$$\tilde{\varphi}_{S_j,k_j}(z_j,t) = \tilde{\varphi}_{S_j,k_j}^{rand}(t) + \varphi_{S_j,k_j}(z_j) \qquad \text{Formel 14}$$

Kommen nun ganz allgemein Strahlen $S_1$ und $S_2$ zur Interferenz, so ergibt sich das elektrische Feld $E_{S1,S2}$ auf der Photodiode zu

$$E_{S_1,S_2}(z_1,z_2,t) = \sum_{k_1} E_{S_1,k_1}(\nu_{S_1,k_1},z_1,t) + \sum_{k_2} E_{S_2,k_2}(\nu_{S_2,k_2},z_2,t) \qquad \text{Formel 15}$$

Das resultierende elektrische Signal der Photodiode ist proportional zur auftretenden Intensität I von

$$I(z_1,z_2,t) = c\varepsilon\varepsilon_0 E_{S_1,S_2}(z_1,z_2,t) E_{S_1,S_2}(z_1,z_2,t)^* \qquad , \qquad \text{Formel 16}$$

Der Stern * bezeichnet die Komplexkonjugation. Durch Einsetzen von Formel 15 in Formel 16 ergeben sich die folgenden Selbstinterferenz- und Mischterme:

$$
\begin{aligned}
I(z_1,z_2,t) = & \left( I_{S1}^{selbst}(z_1,t) + I_{S2}^{selbst}(z_2,t) \right) + \left( I_{S1,S2}^{misch}(z_1,z_2,t) + I_{S1,S2}^{misch}(z_2,z_1,t) \right) \\
= & c\varepsilon\varepsilon_0 \sum_{k_1} \left[ E_{S_1,k_1}(\nu_{S_1,k_1},z_1,t)\left(\sum_{k_2} E_{S_1,k_2}(\nu_{S_1,k_2},z_1,t)^*\right) + E_{S_2,k_1}(\nu_{S_2,k_1},z_2,t)\left(\sum_{k_2} E_{S_2,k_2}(\nu_{S_2,k_2},z_2,t)^*\right) \right] + \\
& c\varepsilon\varepsilon_0 \sum_{k_1} \left[ E_{S_1,k_1}(\nu_{S_1,k_1},z_1,t)\left(\sum_{k_2} E_{S_2,k_2}(\nu_{S_2,k_2},z_2,t)^*\right) + E_{S_2,k_1}(\nu_{S_2,k_1},z_2,t)\left(\sum_{k_2} E_{S_1,k_2}(\nu_{S_1,k_2},z_1,t)^*\right) \right]
\end{aligned}
$$

$$\text{Formel 17}$$

Das Signal der Photodiode wird gemäß einer bevorzugten Ausführungsform durch einen Tiefpass mit der Grenzfrequenz $f_g = a \cdot f_{rep}$ geführt, wobei $f_g = a \cdot f_{rep}$, $a \in R$ ($a$ ist eine reelle Zahl) sehr viel kleiner als $n$ oder $m$ gewählt wird (z.B. $a=5$, $n=100$, $m=101$). Dadurch vereinfacht sich die Summenterme aus Formel 17 deutlich, wie im Folgenden gezeigt wird.

Die Summanden der Selbstinterferenzterme (hier o.B.d.A. für $S_1$ ausgeführt) können mit Formel 12 umgeformt werden in:

$$I_{S1}^{selbst}(z_1,t) = c\varepsilon\varepsilon_0 \sum_{k_1,k_2} E_{S_1,k_1}^0 E_{S_1,k_2}^0 \exp\left[-i\left(\widetilde{\varphi}_{S_1,k_1}(z_1,t) - \widetilde{\varphi}_{S_1,k_2}(z_1,t)\right)\right]\exp\left(-i2\pi t f_{schweb}^{S_1,S_1}(k_1,k_2)\right)$$

**Formel 18**

Die Schwebungsfrequenzen $f_{schweb}^{S_1,S_2}(k_1,k_2)$ ergeben sich dabei mit Formel 10 zu

$$f_{schweb}^{S_1,S_1}(k_1,k_2) := \left|f_{rep}(k_1 n - k_2 n) + f_{AOM,1} - f_{AOM,1}\right| = \left|f_{cav,1}(k_1 - k_2)\right|$$

**Formel 19**

Wegen $f_{cav,1} = nf_{rep} \gg f_g$ bleibt nach der Tiefpassfilterung im elektrischen Signal aus den Selbstinterferenz-termen nur $k_1 = k_2$, d.h. $f_{schweb} = 0$, also nur der konstante Offset

$$I_{S1}^{selbst}(z_1,t) = c\varepsilon\varepsilon_0 \sum_{k_1} E_{S_1,k_1}^0 E_{S_1,k_1}^0 \exp\left[-i\left(\widetilde{\varphi}_{S_1,k_1}(z_1,t) - \widetilde{\varphi}_{S_1,k_1}(z_1,t)\right)\right]$$

$$= c\varepsilon\varepsilon_0 \sum_{k_1} E_{S_1,k_1}^0 E_{S_1,k_1}^0$$

**Formel 20**

übrig.

Für die Mischinterferenzterme gilt analog

$$I_{S1}^{misch}(z_1,z_2,t) = c\varepsilon\varepsilon_0 \sum_{k_1,k_2} E_{S_1,k_1}^0 E_{S_2,k_2}^0 \exp\left[-i\left(\widetilde{\varphi}_{S_1,k_1}(z_1,t) - \widetilde{\varphi}_{S_2,k_2}(z_2,t)\right)\right]\exp\left(-i2\pi t f_{schweb}^{S_1,S_2}(k_1,k_2)\right)$$

**Formel 21**

mit den Schwebungsfrequenzen

$$f_{schweb}^{S_1,S_2}(k_1,k_2) = \left|f_{rep}(k_1 n - k_2 m) + f_{AOM,1} - f_{AOM,2}\right| = \left|f_{rep}(k_1 n - k_2 m) - \Delta f_{AOM}\right|$$

**Formel 22**

Diese elektrischen Signale mit diesen Schwebungsfrequenzen durchlaufen vorzugsweise einen Tiefpassfilter. Sind die optischen Signale zuvor wie in Anspruch 3 angegeben in Frequenzintervalle unterteilt worden, kann man die Kammindices $k_1$ und $k_2$ ausdrücken durch

$$k_1 = \kappa m + r_1 \text{ und } k_2 = \kappa n + r_2,$$

**Formel 23**

wobei $\kappa = 0, 1, 2, \ldots$ die Ordnung des Frequenzintervalls und r Kammlinienindex genannt wird. Es gilt

$$r \in \left\{-\left\lfloor\frac{\min(n,m)}{2}\right\rfloor, -\left\lfloor\frac{\min(n,m)}{2}\right\rfloor + 1, \ldots, \left\lfloor\frac{\min(n,m)}{2}\right\rfloor - 1, \left\lfloor\frac{\min(n,m)}{2}\right\rfloor\right\}$$

**Formel 24**

Die ⌊ ⌋-Funktion oder Floor-Funktion ordnet einer Zahl die größte aller kleineren ganzen Zahlen zu. Damit lässt sich die Schwebungsfrequenz $f_{schweb}^{S_1,S_2}(k_1,k_2)$ durch Einsetzen in Formel 19 ausdrücken durch

$$f_{schweb}^{S_1,S_2}(\kappa m + r_1, \kappa n + r_2) = \left| f_{rep}(\kappa mn + r_1 n - \kappa nm - r_2 m) - \Delta f_{AOM} \right| =$$

$$\left| f_{rep}(r_1(n-m) - (r_2 - r_1)m) - \Delta f_{AOM} \right| =$$

$$\left| f_{rep}(r_1(n-m) - \Delta r\, m) - \Delta f_{AOM} \right|$$

Formel 25

mit der Differenzordnung

$$\Delta r = r_2 - r_1$$

Formel 26

Sind - wie gemäß einer bevorzugten Ausführungsform vorgesehen - n und m so gewählt, dass |n-m| << m gilt, und wird das Schwebungssignal tiefpassgefiltert, so schneidet der Tiefpassfilter alle Schwebungsfrequenzen ab, die aus der Interferenz von Kammlinien unterschiedlicher Kammlinienindices r stammen. Im elektrischen Signal bleiben also nur die Schwebungsfrequenzen $f_{schweb}^{S_1,S_2}(k_1,k_2)$ übrig, bei denen die Bedingung $r_1=r_2=r$ und $f_{schweb}^{S_1,S_2}(\kappa m + r, \kappa n + r) < f_g$ erfüllt sind. Dabei ist $f_g$ die Grenzfrequenz des Tiefpassfilters.

Mit Formel 25 folgt

$$f_{schweb}^{S_1,S_2}(\kappa m + r, \kappa n + r) = \left| f_{rep} r(n-m) - \Delta f_{AOM} \right|$$

Formel 27

Die Mischterme aus Formel 17 und Formel 21 vereinfachen damit zu

$$I_{S_1,S_2}^{misch}(z_1,z_2,t) =$$

$$= c\varepsilon_0 \sum_r E_{S_1,\kappa m+r}^0 E_{S_2,\kappa n+r}^0 \exp\left[- i\left(\tilde{\varphi}_{S_1,\kappa m+r}(z_1,t) - \tilde{\varphi}_{S_2,\kappa n+r}(z_2,t)\right)\right] \exp\left[- i2\pi t f_{schweb}^{S_1,S_2}\right]$$

Formel 28

Über die komplexe Darstellung der Kosinusfunktion ergibt sich für die Summe der Mischterme

$$I_{S_1,S_2}^{misch}(z_1,z_2,t) + I_{S_2,S_1}^{misch}(z_2,z_1,t) =$$

$$= \sum_r I_{Kr}^0 \cos\left(2\pi t f_{schweb}^{S_1,S_2}(\kappa m + r, \kappa n + r) + \left(\tilde{\varphi}_{S_1,\kappa m+r}(z_1,t) - \tilde{\varphi}_{S_2,\kappa n+r}(z_2,t)\right)\right)$$

Formel 29

mit der Schwebungsamplitude

$$I_{Kr}^0 = c\varepsilon_0 E_{S_1,\kappa m+r}^0 E_{S_2,\kappa n+r}^0$$

Formel 30

Durch die Tiefpassfilterung entsteht also aus Formel 17 ein elektrischer Frequenzkamm, dessen Signalstärke U sich durch Einsetzen von Formel 20 und Formel 29 in Formel 17 ergibt:

$$U(z_1, z_2, z) = U_{offset} + \sum_r U(\kappa, r) \cos\left(2\pi f_{schweb}(\kappa, r) t + \Delta\tilde{\varphi}(\kappa, r, z_1, z_2, t)\right) \qquad \text{Formel 31}$$

mit den vereinfachten Schreibweisen

$$f_{schweb}(\kappa, r) := f_{schweb}^{S_1, S_2}(\kappa m + r, \kappa n + r) \quad \text{und} \qquad \text{Formel 32}$$

$\Delta\tilde{\varphi}(\kappa, r, z_1, z_2, t) := \tilde{\varphi}_{S_1, \kappa m + r}(z_1, t) - \tilde{\varphi}_{S_2, \kappa n + r}(z_2, t)$.

$U_{Offset}$ ergibt sich, wenn bei einem Frequenzkamm mit der Signalstärke $U(z_1, z_2, t)$ der konstante Anteil $U_{Offset}(z_1)$ durch Einsetzen von Formel 20 in Formel 17 errechnet wird. Das Amplitudenspektrum des Frequenzkamms ergibt sich durch Einsetzen von Formel 29 in Formel 17.

Die elektrischen Schwebungsfrequenzen können nun durch elektronische Bandpassfilter voneinander getrennt werden. Die Phasen $\Delta\tilde{\varphi}(\kappa, r, z_1, z_2, t)$ der so isolierten Linien mit den Schwebungsfrequenzen $f_{schweb}(\kappa, r)$ werden dann durch elektronisches Mischen mit entsprechenden Referenzfrequenzen $f_{ref}(\kappa, r) = f_{schweb}(\kappa, r)$ bestimmt ("phasensensitive Detektion"). Das erfolgt beispielsweise über einen Lock-In-Verstärker.

Diese Phasenmessung wird am Referenzdetektor und am Messdetektor zu den Zeitpunkten $t_a$ und $t_b$ durchgeführt. Aus diesen Phasenmessungen lässt sich auf die folgende Weise die zwischen $t_a$ und $t_b$ zurückgelegte Messstrekke L bestimmen.

Es bezeichnen im Folgenden $\Delta\varphi^R(t)$ und $\Delta\varphi^M(t)$ die nach Formel 32 aus den Referenz- und Messdetektoren zum Zeitpunkt t gewonnen Phasenwerte. Nach Gleichungen Formel 14 und Formel 32 kann man diese ausdrücken durch

$$\Delta\varphi^{R,M}(t_a) = \varphi_{S_1, k_1}^{rand}(t_a) + \varphi_{S_1, k_1}\left(z_1^{R,M}(t_a)\right) - \varphi_{S_2, k_2}^{rand}(t_a) - \varphi_{S_2, k_2}\left(z_2^{R,M}(t_a)\right) \qquad \text{Formel 33}$$

Zieht man nun die Schwebungsphase der Referenz $\Delta\varphi^R(t_a)$ von der Phase der Messdiode $\Delta\varphi^M(t_a)$ ab, so fallen (näherungsweise) zufällige Phasenänderungen $\varphi_{S_{1,2}, k_{1,2}}^{rand}(t_a)$ aus dem Ergebnis heraus und man erhält:

$$\Delta\varphi^R(t_a) - \Delta\varphi^M(t_a) = \left[\varphi_{S_1, k_1}\left(z_1^R(t_a)\right) - \varphi_{S_1, k_1}\left(z_1^M(t_a)\right)\right] - \left[\varphi_{S_2, k_2}\left(z_2^R(t_a)\right) - \varphi_{S_2, k_2}\left(z_2^M(t_a)\right)\right]$$

$$\text{Formel 34}$$

Diese Differenz hängt wegen Formel 13 nur noch von den Wegunterschieden zwischen Referenz- und Messinterferometer sowie den beiden interferierenden Strahlfrequenzen ab:

$$\Delta\varphi^R(t_a) - \Delta\varphi^M(t_a) = K_1\left(z_1^R(t_a) - z_1^M(t_a)\right) - K_2\left(z_2^R(t_a) - z_2^M(t_a)\right) \qquad \text{Formel 35}$$

Wird diese Phasendifferenz nun erneut zum Zeitpunkt $t_b$ bestimmt, ändert sich nur die Messstrahllänge $z_1^M(t_b)$, alle anderen optischen Wege bleiben gleich und es gilt:

$$z_2^M(t_a) = z_2^M(t_b) \quad \text{und} \qquad \text{Formel 36}$$

$$z_{1,2}^R(t_a) = z_{1,2}^R(t_b)$$

Mit den Randbedingungen nach Formel 36 ergibt sich also aus Formel 35 für die Phasendifferenz $\phi$ zu den verschiedenen Zeiten $t_a$ und $t_b$:

**Formel 37**

$$\phi(t_a,t_b) = \left[\Delta\varphi^R(t_a) - \Delta\varphi^M(t_a)\right] - \left[\Delta\varphi^R(t_b) - \Delta\varphi^M(t_b)\right] =$$
$$= K_1\left(z_1^M(t_a) - z_1^M(t_b)\right)$$

Wird die zu messende Strecke L mit einem Retroreflektor überstrichen, so ist die zurückgelegte optische Wegdifferenz $z_1^M(t_a) - z_1^M(t_b)$ genau doppelt so groß. Zusammen mit der Definition nach Formel 13 ergibt sich dann

**Formel 38**

$$\phi(t_a,t_b) = \frac{4\pi\nu_{S_1,k_1}}{c}n_L L = \frac{4\pi}{\lambda_{S_1,k_1}}n_L L$$

$n_L$ ist die Brechzahl der Luft. Die derart heterodyn gemessene Phase $\phi(t_a,t_b)$ der festen Schwebungsfrequenz

**Formel 39**

$$f_{schweb}(\kappa,r) = \left|f_{rep}r(n-m) - \Delta f_{AOM}\right|$$

ist also gleich der Phasenänderung, die mit einem cw-Laser der optischen Frequenz

**Formel 40**

$$\nu_{S_1,\kappa n+r} = f_{ceo} + (\kappa m + r)nf_{rep} + f_{AOM,1}$$

mit der dazugehörigen Vakuumwellenlänge

**Formel 41**

$$\lambda_{S_1,\kappa n+r} = \frac{c}{\nu_{S_1,\kappa n+r}}$$

beim Überstreichen der Messstrecke L gemessen wird.

Die Offsetfrequenz $f_{ceo}$ und die AOM-Treiberfrequenz $f_{AOM}$ werden unabhängig bestimmt. Der Kammlinienindex ergibt sich bei Kenntnis von m und n aus der gemessenen Schwebungsfrequenz. Die Ordnung $\kappa$ des verwendeten Frequenzintervalls wird beispielsweise mit einem optischen Spektrumanalysator mit nm-Auflösung bestimmt. Daher kann jeder derart gemessenen Phase $\phi_i$ eindeutig die entsprechende optische Frequenz der entsprechenden $\nu_i$ bzw. die optische Wellenlänge $\lambda_i$ der "messenden" Kammlinie zugeordnet werden.

Man erhält also durch die beschriebene Mischung der beiden Kämme eine Vielzahl optischer Phasen $\phi_i$. Wie bei jeder interferometrischen Längenmessung ist der Eindeutigkeitsbereich der einzelnen Phasenmessung auf die Hälfte der optischen Wellenlänge $\lambda_i$ begrenzt. Die bekannte Idee der Mehrwellenlängeninterferometrie ist, die Phaseninformation verschiedener Wellenlängen zu kombinieren und den Eindeutigkeitsbereich dadurch zu vergrößern.

Für die Phasendifferenz $\Delta\phi_{\alpha,\beta}$ zweier optischer Phasen $\phi_\alpha$ und $\phi_\beta$ mit assoziierten Wellenlängen ($\lambda_\beta > \lambda_\alpha$) gilt:

**Formel 42**

$$\Delta\phi_{\alpha,\beta} := \phi_\alpha - \phi_\beta = 4\pi L\left(\frac{n_{L\alpha}}{\lambda_\alpha} - \frac{n_{L\beta}}{\lambda_\beta}\right) =: 4\pi\frac{n_g}{\Lambda_{\alpha,\beta}}L$$

mit dem Gruppenbrechungsindex

$$n_g := n_{L\alpha} - \frac{n_{L\alpha} - n_{L\beta}}{\lambda_\alpha - \lambda_\beta}$$

Formel 43

und der synthetischen Wellenlänge

$$\Lambda_{\alpha,\beta} := \frac{\lambda_\alpha \lambda_\beta}{\lambda_\beta - \lambda_\alpha} \cdot$$

Formel 44

Schritt (g):

Schließlich erfolgt das Berechnen der absoluten Länge aus dem Schwebungssignal. Dieser Schritt kann ein phasensensitives Detektieren der elektrischen Schwebungsfrequenz umfassen.

Jede der angegebenen synthetischen Frequenzen zeigt eine sich ändernde Interferenz, wenn sich die Messstreckenlänge L ändert. Allgemein gilt

$$\phi_1 = \frac{4\pi}{\lambda_1} n_{L1} L$$

Formel 45

mit der Phase $\phi_1$ der entsprechenden Welle, deren Wellenlänge $\lambda_1$, dem zur Wellenlänge $\lambda_1$ gehörenden Brechungsindex $n_1$ und der Länge L der Messstrecke. (In Formel 45 ist die Phase *nicht* modulo $2\pi$ angegeben!)

Für die Differenz zweier Phasen $\phi_1$ und $\phi_2$, die zu zwei unterschiedlichen Wellenlängen $\lambda_1$ und $\lambda_2$ gehören, ergibt sich:

$$\Delta\phi_{1,2} := \phi_1 - \phi_2 = \frac{4\pi}{\lambda_1} n_{L1} L - \frac{4\pi}{\lambda_2} n_{L2} L = 4\pi L \left( \frac{n_{L1}}{\lambda_1} - \frac{n_{L2}}{\lambda_2} \right)$$

$$\Leftrightarrow L = \frac{\Delta\phi_{1,2} \lambda_1 \lambda_2}{4\pi (n_{L1}\lambda_2 - n_{L2}\lambda_1)}$$

Formel 46

Die gemessene Phasendifferenz $\Delta\phi_{1,2}$ ist nur modulo $2\pi$ bekannt, so dass die Berechnung wie stets in der Interferometrie nur dann eindeutig ist, wenn die gesuchte Länge L bis auf einen Betrag innerhalb einer halben Wellenlänge bekannt ist.

Gemäß einer bevorzugten Ausführungsform werden hohe Frequenzen im Schwebungssignal herausgefiltert. Es tragen dann nur niederfrequente Frequenzanteile zum Schwebungssignal bei. Für diese bei der Messung berücksichtigten Frequenzen $f_{schweb,\alpha}$ gilt für die Zählindices $k_1$ und $k_2$ aus Formel 10 (Seite 6)

$$k_1 = \kappa_1 m + \Delta k_{\alpha,1} \text{ und}$$

Formel 47

$$k_2 = \kappa_1 n + \Delta k_{\alpha,2} \text{ mit } \Delta k_\alpha = 0, \pm 1, \pm 2, \ldots$$

Über die Indices $\Delta k_{\alpha,1}$, $\Delta k_{\alpha,2} = 0, \pm 1, \pm 2, \ldots$ ergeben sich die zur Schwebung beitragenden optischen Frequenzen $\nu_{\alpha,1}$, $\nu_{\alpha,2}$. Für die praktisch relevanten niedrigsten Schwebungsfrequenzen gilt die Bedingung

$$\Delta k_{\alpha,1} = \Delta k_{\alpha,2} = \Delta k_\alpha,$$

Formel 48

mit der im Folgenden ohne Beschränkung der Allgemeinheit der Einfachheit halber weiter gerechnet wird.

Die an der entsprechenden Schwebungsfrequenz detektierte Phase $\varphi_\alpha$ kann gemäß Formel 40 der optischen Frequenz

$$\nu_\alpha = f_{CEO} + (\kappa_1 m + \Delta k_\alpha) n f_{rep} + f_{AOM,1} \qquad \text{Formel 49}$$

zugeordnet werden.

Nun lassen sich durch Kombinieren der Phasen verschiedener Schwebungssignale mehrerer Ordnungen $\Delta k_\alpha$ und $\Delta k_\beta$ innerhalb eines Frequenzintervalls I (das heißt, es gilt $\kappa_\alpha = \kappa_\beta$) und zwischen verschiedenen Frequenzintervallen (das heißt, es gilt $\kappa_\alpha \neq \kappa_\beta$) beliebig viele Folgen synthetischer Wellenlängen $\Lambda(q)$ mit dem Zählindex q = 0, 1, 2, ...finden, für die gilt:

$$\frac{\Lambda(q)}{N(q)} < \frac{\Lambda(q+1)}{4} \qquad \text{Formel 50}$$

Für jede optische Wellenlänge $\lambda_{\kappa_0}^{k_0}$ gibt es daher eine endliche Folge an synthetischen Wellenlängen, also q = 0, 1, ... , $q_{end}$, so dass

$$\frac{\Lambda(q_{end})}{N(q_{end})} < \frac{\lambda_{\kappa_0}^{k_0}}{4} \qquad \text{Formel 51}$$

gilt.

Mit Hilfe dieser Folge A(q) an synthetischen Wellenlängen ergibt sich die gemessene Distanz zu:

$$L = \sum_{q=0}^{q_{end}} \left[ \left\lfloor \frac{\phi_{\alpha_q, \beta_q}(q)}{2\pi n_g(q)} - \frac{\phi_{\alpha_{q+1}, \beta_{q+1}}(q+1)}{2\pi n_g(q+1)} + \frac{1}{2} \right\rfloor \frac{\Lambda(q)}{2} \right] + \frac{\phi_0}{2\pi n_0} \frac{\lambda_{\kappa_0}^{k_0}}{2} \qquad \text{Formel 52}$$

gilt. Darin ist $\phi_{\alpha,\beta}$ die in Formel 46 angegebene Phase der Schwebung mit der synthetischen Wellenlänge $\Lambda(q)$. $n_g(q)$ ist die Gruppenbrechzahl

$$n_g(q) = n_{\alpha_q} - \frac{n_{\alpha_q} - n_{\beta_q}}{\lambda_{\alpha_q} - \lambda_{\beta_q}} \lambda_{\alpha_q} \qquad \text{Formel 53}$$

und die $\lfloor\ \rfloor$-Funktion liefert die größte ganze Zahl, die kleiner ist als das Argument. $\varphi_0$ ist die zur Wellenlänge $\lambda_{\kappa_0}^{k_0}$ gehörende Phase. Der letzte Phasenterm der Summe in Formel 52 wird gleich dieser optischen Phase gewählt:

$$\phi_0 = \phi_{\alpha_q, \beta_q}(q_{end} + 1) \qquad \text{Formel 54}$$

Ein Berechnungsbeispiel ist weiter unten in Tabelle 1 und Tabelle 2 angegeben.

Günstig ist es, wenn die Repetitionsfrequenz $f_{rep}$, um die die Kammlinien äquidistant beabstandet sind, mehr als doppelt so groß ist wie der Frequenzversatz $\Delta f_{AOM}$. In diesem Fall ist gemäß Formel 10: $f_{Schwebung} = |f_{rep}(k_1 n - k_2 m) - \Delta f_{AOM}|$ die Schwebungsfrequenz $f_{Schwebung}$ dann minimal, wenn

$$k_1 n - k_2 m = 0 \qquad \text{Formel 55}$$

gilt, denn als Differenz aus Produkten natürlicher Zahlen ist $k_1 n - k_2 m$ andernfalls zumindest eins und die Schwebung $|f_{rep} - \Delta f_{AOM}|$ größer als $f_{rep}$. Es ergibt sich so ein besonders einfach auszuwertendes Ergebnis, wie im Folgenden gezeigt wird.

Da n und m teilerfremd gewählt und $k_1$, $k_2$ natürliche Zahlen sind, liefert Formel 55 die Lösungen

$$k_1 = m \text{ und } k_2 = n, \qquad \text{Formel 56}$$

$$k_1 = 2m \text{ und } k_2 = 2n, \dots ,$$

(Wären $k_1$, $k_2$, teilerfremd, so könnte durch den größten gemeinsamen Teiler geteilt werden und es ergäbe sich für den Rest die obige Lösung. Da aber n, m teilerfremd sind, ergibt sich ein Widerspruch, womit auch bewiesen ist, dass $k_1$ und $k_2$ ebenfalls teilerfremd sind.)

Für die erste Lösung liefert Formel 2 die Frequenz des ersten Strahls $S_1$ zu $\nu_{S1,1} = f_{CEO} + k_1 n f_{rep} = f_{CEO} + nmf_{rep}$, was gemäß Formel 4 der Frequenz des zweiten Strahls $S_2$ entspricht: $\nu_{S2,k2} = f_{CEO} + nm\, f_{rep}$. Für die zweite Lösung folgt $\nu_{S1,2} = f_{CEO} + 2nmf_{rep}$ und $\nu_{S2} = f_{CEO} + 2nmf_{rep}$, der Frequenzabstand $\Delta f$ zwischen zwei Lösungen ist daher

$$\Delta f = n\, m\, f_{rep} \qquad \text{Formel 57}$$

**Beispiel:**

Tabelle 1

| | | | | | |
|---|---|---|---|---|---|
| $f_{rep}$ = 100 MHz | $\Delta f_{AOM}$ = 10 MHz | $f_{CEO}$ = 0 Hz | n = 100 | m = 101 | |
| $N_i$ = 100 | | | | | |

$N_i$ ist die natürliche Zahl, für die gilt, dass sich eine synthetische Wellenlänge $A_i$ mit der Genauigkeit des $N_i$-ten Bruchteils interpolieren lässt. Formel 56 liefert als erste Lösung $k_1 = 101$ und $k_2 = 100$, Formel 10 ergibt $f_{Schwebung} = 10$ MHz. Formel 57 liefert $\Delta f = nm_{frep} = 10100 \cdot 100\text{MHz} = 1{,}01\text{THz}$.

Eine Folge A(q), die Formel 50 genügt, ist dann

Tabelle 2

| q | q = 0 | q = 1 | q = 2 | q = 3 |
|---|---|---|---|---|
| $\kappa_{\alpha q}$ , $\kappa_{\beta q}$ | 381, 381 | 381, 381 | 381, 382 | 377,385 |
| $\Delta k_{\alpha q}$ $\Delta k_{\beta q}$ | 0,1 | 0,-3 | 0,0 | 0,0 |
| $f_{schweb,\alpha q}$ | 10 MHz | 10 MHz | 10 MHz | 10 MHz |
| $f_{schweb,\beta q}$ | 110 MHz | 290 MHz | 10 MHz | 10 MHz |
| $\nu_{\alpha q}$ | 384,81 THz | 384,81 THz | 384,81 THz | 380,77 THz |
| $\nu_{\beta q}$ | 384,82 THz | 384,78 THz | 384,82 THz | 388,85 THz |
| $\dfrac{\Lambda(q)}{2}$ | 14,99 mm | 5,0 mm | 148,41 $\mu$m | 18,55 $\mu$m |
| $\dfrac{\Lambda(q)}{100}$ | 149,9 $\mu$m | 49,97 $\mu$m | 1,48 $\mu$m | 0,19 $\mu$m |
| $\dfrac{\Lambda(q)}{4}$ | - | 2,50 mm | 74,21 $\mu$m | 9,28 $\mu$m |

Durch das phasensensitive Detektieren der elektrischen Schwebungsfrequenz $f_{schweb}$ = 10 MHz wird beispielsweise die optische Phase $\phi_0$ der Kammlinie mit der optischen Frequenz $\nu_0$ = 384,81 THz bzw. der optischen Wellenlänge $\lambda_0$ = 779,07 nm bestimmt werden.

Zudem kann nach obigen Schema auch die Phase $\phi_1$ der benachbarten Kammlinie mit der optischen Frequenz $\nu_1$ = 384,81 THz+10 GHz bzw. der optischen Wellenlänge $\lambda_1$ = 779,05 nm durch phasensensitive Detektion der elektrischen Schwebungsfrequenz $f_{schweb}$ = 110 MHz gewonnen werden.

Durch Subtraktion dieser Phaseninformationen lässt sich die synthetische Phase $\Delta\phi_{0,1}$ einer (virtuellen) optischen Schwebungsfrequenz $\Delta\nu_{1,2}^{synth}$ = 10 GHz bestimmen (vergleiche Formel 42). Der Eindeutigkeitsbereich dieser Längenmessung beträgt $\Lambda_{1,2}/2$= 14,99 mm.

Gemäß einer bevorzugten Ausführungsform umfasst das Verfahren den Schritt (f2) eines Aufteilens des mindestens einen Schwebungssignals in ein erstes Frequenzintervall und zumindest ein zweites Frequenzintervall, so dass gilt, dass das erste Frequenzintervall durch Hinzuaddieren eines festen Frequenzabstands $\Delta f$ in das zweite Frequenzintervall überführbar ist. Es ist möglich, nicht aber notwendig, dass die Frequenzintervalle überlappungsfrei sind. Im Folgenden werden der Einfachheit halber überlappungsfreie Frequenzintervalle beschrieben.

Das erste Frequenzintervall ist vorzugsweise ein Intervall optischer Frequenzen. Als erstes Frequenzintervall wird vorzugsweise ein Intervall gewählt, das eine Umgebung einer optischen Frequenz umfasst, für die $\nu_{S1,k1}$ = $f_{CEO}$ + $k_1\,n f_{rep}$ gilt. Besonders gut geeignet ist ein erstes Frequenzintervall

$$I_1 = [f_{CEO} + \kappa m n f_{rep} - \left\lfloor \frac{\min\{n,m\}}{2} \right\rfloor n f_{rep}, f_{CEO} + \kappa m n f_{rep} + \left\lfloor \frac{\min\{n,m\}}{2} \right\rfloor n f_{rep}], \quad \text{Formel 58}$$

wobei $\kappa$ als Ordnung der Frequenz bezeichnet werden kann, eine natürliche Zahl ist und so gewählt ist, dass $\kappa m n f_{rep}$ eine Frequenz im Bereich des Spektrums des Frequenzkamms ist. Dabei ist $\left\lfloor \frac{\min\{n,m\}}{2} \right\rfloor$ die größte ganze Zahl ist, die höchstens so groß ist wie die Hälfte des Minimums von n und m. Im Falle von n = 100 und m = 101 gilt $\left\lfloor \frac{\min\{100,101\}}{2} \right\rfloor = 50$. Diese Frequenzintervalle sind überlappungsfrei, was vorteilhaft ist. Es ist aber auch möglich, nicht überlappungsfreie Frequenzintervalle zu wählen.

Beispiel (wie oben):

$$f_{rep}=100\,MHz \quad \Delta f_{AOM} = 10\,MHz \quad f_{CEO} = 0\,Hz \quad n = 100 \quad m = 101$$

Im Beispiel ist der Frequenzabstand $\Delta f$ = 1,01 THz, für das Frequenzintervall $I_1$ gemäß Formel 58 gilt mit der Ordnung $\kappa$ = 381

$$I_1 = [f_{CEO} + \kappa m n f_{rep} - \left\lfloor \frac{\min\{n,m\}}{2} \right\rfloor n f_{rep}, \quad f_{CEO} + \kappa m n f_{rep} + \left\lfloor \frac{\min\{n,m\}}{2} \right\rfloor n f_{rep}] \quad \text{(Formel 58)}$$
$$= [381 \cdot 101 \cdot 100 \cdot 100\,MHz - 50 \cdot 10\,GHz, \quad \kappa 10{,}1\,GHz + 50 \cdot 10\,GHz] \quad ,$$
$$= [384{,}81\,THz - 500\,GHz, \quad 384{,}81\,THz + 500\,GHz]$$

$\kappa$ = 381 entspricht der Lösung $k_1$ = 381 m und $k_2$ = 381 n. Es ergibt sich den ersten Strahl $S_1$ die Frequenz

$$\nu_{S1,381} = f_{CEO} + k_1 n f_{rep}$$
$$= f_{CEO} + 381mn f_{rep} = 384,81 THz \quad \text{mit } \lambda = \frac{c}{\nu_{S1,381}} = 779,1nm$$

Die nächste optische Frequenz $\nu_{S1,382}$ gehört zu den Lösungen $k_1 = 381m$ und $k_2 = 382n$ für den ersten Strahl $S_1$, also zu $\nu = 385,82$ THz und $\lambda = 777,0$ nm. Der Wellenlängenabstand

$$\Delta\lambda_{381,382} = \frac{c}{\nu_{S1,381}} - \frac{c}{\nu_{S1,382}} \approx 779,1nm - 777,0nm \approx 2,1\,nm \qquad \text{Formel 59}$$

beträgt ca. 2 nm. Zu der gleichen Schwebungsfrequenz gehörende, unterschiedliche optische Frequenzen lassen sich aufgrund des Wellenlängenabstands mit optischen Mitteln trennen, beispielsweise mittels optischer Gitter.

**Berechnung der Messstreckenlänge L für das angegebene Beispiel:**

Zu den Indices $k_1 = 381m$ und $k_2 = 381\,n$, also zur Ordnung $\kappa = 381$ gehören die Strahlfrequenzen $\nu_{S1,381m-1} = f_{CEO} + 381mn f_{rep} = 384,81 THz$ und die Schwebungsfrequenz 10 MHz, da aus Formel 10 folgt: $f_{schwebung} = |f_{rep}(k_1 n - k_2 m) - \Delta f_{AOM}| = \Delta f_{AOM}$

Die Schwebungsfrequenz 10 MHz gehört also zu der Frequenz 384,81 THz eines Mess- beziehungsweise Referenzstrahls eines Heterodyn-Interferometers nach dem Stand der Technik. Ändert sich die Messstreckenlänge L, so ändert sich die Phase der Schwebungsfrequenz, was detektiert wird.

Zu den Indices $k_1 = 381\,m-1$ und $k_2 = 381\,n-1$ gehören die Strahlfrequenzen $\nu_{S1,381m-1} = \nu_{S2,381n-1} = f_{CEO} + (381m - 1)n f_{rep} = 384,81 THz - 100 f_{rep} = 384,81 THz - 10$ GHz und die Schwebungsfrequenz

$$f_{Schwebung} = |f_{rep}((381m - 1)n - (381n - 1)m) - \Delta f_{AOM}| = |100\,MHz(381mn - n - 381nm + m) - \Delta f_{AOM}|$$
$$= |100\,MHz(-n + m) - \Delta f_{AOM}| = |100\,MHz - \Delta f_{AOM}| = 90\,MHz$$

Zu den Indices $k_1 = 381\,m+1$ und $k_2 = 381\,n+1$ gehören die Strahlfrequenzen $\nu_{S1,381m+1} = \nu_{S2,381n+1} = f_{CEO} + (381m + 1)n f_{rep} = 384,81 THz + 100 f_{rep} = 384,81 THz + 10$ GHz und die Schwebungsfrequenz

$$f_{Schwebung} = |f_{rep}((381m + 1)n - (381n + 1)m) - \Delta f_{AOM}| = |100\,MHz(381mn + n - 381nm - m) - \Delta f_{AOM}|$$
$$= |100\,MHz(n - m) - \Delta f_{AOM}| = |-100\,MHz - \Delta f_{AOM}| = 110\,MHz$$

Zu den Indices $k_1 = 381\,m-2$ und $k_2 = 381\,n-2$ gehören die Strahlfrequenzen $\nu_{S1,381m-2} = \nu_{S2,381n-2} = f_{CEO} + (381m-2)n f_{rep} = 384,81 THz - 2 \cdot 100 f_{rep} = 384,81 THz - 20 GHz$ und die Schwebungsfrequenz

$$f_{Schwebung} = |f_{rep}((381m - 2)n - (381n - 2)m) - \Delta f_{AOM}| = |100\,MHz(381mn - 2n - 381nm + 2m) - \Delta f_{AOM}|$$
$$= |100\,MHz(-2n + 2m) - \Delta f_{AOM}| = |200\,MHz - \Delta f_{AOM}| = 190\,MHz$$

Zu den Indices $k_1 = 381m+2$ und $k_2 = 381n+2$ gehören die Strahlfrequenzen $\nu_{S1,381m+2} = \nu_{S2,381n+2} = f_{CEO} + (381m + 2)n f_{rep} = 384,81 THz + 2 \cdot 100 f_{rep} = 384,81 THz + 20 GHz$ und die Schwebungsfrequenz

$$f_{Schwebung} = |f_{rep}((381m + 2)n - (381n + 2)m) - \Delta f_{AOM}| = |100\,MHz(381mn + 2n - 381nm + 2m) - \Delta f_{AOM}|$$
$$= |100\,MHz(2n - 2m) - \Delta f_{AOM}| = |-200\,MHz - \Delta f_{AOM}| = 210\,MHz$$

Der Aufstellung ist zu entnehmen, dass jede Schwebungsfrequenz eineindeutig zu einer optischen Frequenz gehört, sofern bekannt ist, in welchem Frequenzintervall die optische Frequenz liegt und damit, zu welcher Ordnung $\kappa$ die optische Frequenz gehört. Dieses Frequenzintervall zu identifizieren gelingt mit optischen Mitteln, beispielsweise einem Gitter. Es sei angenommen, dass ausschließlich der Strahl $S_1$ auf die Messstrecke geschickt wird. Betrachtet wird die Ordnung $\kappa = 381$.

Aus den Phasen der Schwebungsfrequenzen $f_{Schwebung} = 10$, 90 und 110 MHz lassen sich nach Formel 46 optische Schwebungsfrequenzen von $\pm$ 10 GHz zuordnen. Hieraus folgt die synthetische Wellenlänge $\Lambda = c/10\text{GHz} \approx$ 30mm. Erfolgt das Senden zumindest eines der Strahlen auf die Messstrecke so, dass der Strahl von einem Retroreflektor reflektiert wird, so ist die Periode der Phase der synthetischen Welle $\Lambda/2 = c/2 \cdot 10\text{GHz} \approx 15\text{mm}$. Wenn die Messstreckenlänge L zumindest auf 7,5 mm genau bekannt ist, kann gemäß Formel 45 durch Ermitteln der Phase die Messstreckenlänge L gemessen werden.

Gemäß einer bevorzugten Ausführungsform beträgt der Frequenzabstand zumindest 0,5 THz, insbesondere zumindest 1 THz. In diesem Fall beträgt der Unterschied in den Wellenlängen wie oben gezeigt ca. 1 nm beziehungsweise. 2 nm, was gut mit optischen Bauteilen trennbar ist, beispielsweise durch ein optisches Gitter.

Vorzugsweise besitzt die Absolut-Längenmessvorrichtung eine elektrische Auswerteeinheit, die eingerichtet ist zum Berechnen der absoluten Länge aus dem Schwebungssignal.

Vorzugsweise ist die erste Messstrecke Teil eines Heterodyninterferometers.

Günstig ist es, wenn die Absolut-Längenmessvorrichtung ein nichtinterferometrisches, insbesondere optisches, Absolut-Längenmessgerät, insbesondere ein Absolut-Längenmessgerät umfasst, dessen Messgenauigkeit unterhalb eines Viertels der größten synthetischen Wellenlänge liegt. Es ist dann möglich, anhand des nichtinterferometrischen, insbesondere nicht-optischen Absolut-Längenmessgeräts die gesuchte Länge der Messstrecke so genau vorzubestimmen, dass anhand des oben beschriebenen Verfahrens eine sukzessive Verfeinerung der Messgenauigkeit ermöglicht wird. Es ist dann möglich, auch große Längen mit höchster Genauigkeit zu vermessen. Bei dem nicht interferometrischen Absolut-Längenmessgerät kann es sich beispielsweise um ein Laufzeit-Messgerät handeln.

Im Folgenden wird die Erfindung anhand der beigefügten Zeichnungen näher erläutert. Dabei zeigt

Figur 1    ein Schaltbild einer erfindungsgemäßen Absolut-Längenmessvorrichtung zum Durchführen eines erfindungsgemäßen Verfahrens und

Figur 2    das Spektrum des ersten Strahls und des zweiten Strahls.

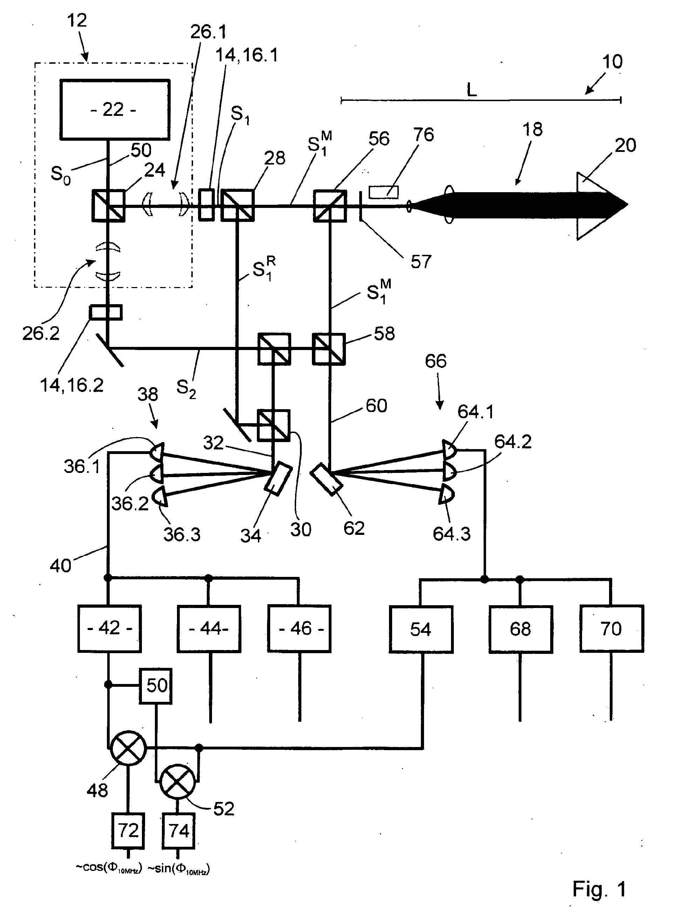

Figur 1 zeigt eine erfindungsgemäße Absolut-Längenmessvorrichtung 10 mit einer Lichtquelle 12 zum Erzeugen des ersten Strahls $S_1$ und des zweiten Strahls $S_2$. Die Absolut-Längenmessvorrichtung 10 umfasst zudem eine Frequenzversatz-Erzeugungsvorrichtung 14, die im vorliegenden Fall aus zwei Teil-Vorrichtungen 16.1, 16.2 in Form von akusto-optischen Modulatoren 16 aufgebaut ist. Die Frequenzversatz-Erzeugungsvorrichtung 14 erzeugt einen Frequenzversatz $\Delta f_{AOM}$ zwischen den beiden Strahlen $S_1$ und $S_2$.

Die Absolut-Längenmessvorrichtung 10 umfasst zudem eine Messstrecke 18, die einen Retroreflektor 20 umfasst und in der beim Betrieb ein Teil des ersten Strahls $S_1$ läuft. Die Lichtquelle 12 umfasst zudem eine Frequenzkammerzeugungsvorrichtung in Form eines Frequenzkammlasers 22, der im Folgenden als Femtosekundenlaser bezeichnet wird. Der Femtosekundenlaser 22 gibt einen Primärstrahl $S_0$ ab, der von einem Strahlteiler 24 in den ersten Strahl $S_1$ und den zweiten Strahl $S_2$ geteilt wird. Es ist möglich, dass der Primärstrahl $S_0$ in einem Lichtleiter geführt wird, oder sich ungebunden ausbreitet. Das Gleiche gilt insbesondere auch für die Strahlen $S_1$ und $S_2$.

Der erste Strahl $S_1$ durchläuft eine erste Frequenzkamm-Filtervorrichtung 26.1 in Form eines ersten Etalons, die so eingerichtet ist, dass nur jede n-te Kammlinie des vom Femtosekundenlaser 22 abgegebenen Frequenzkamms passieren kann. Der Primärstrahl $S_0$ durchläuft ein zweite Frequenzkamm-Filtervorrichtung 26.2 in Form eines zweiten Etalons, die so eingerichtet ist, dass nur jede m-te Kammlinie passieren kann.

Hinter der ersten Frequenzkamm-Filtervorrichtung 26.1 trifft der erste Strahl $S_1$ auf einen zweiten Strahlteiler 28, der den ersten Strahl $S_1$ in einen Teilstrahl $S_1^R$ und einen zweiten Teilstrahl $S_1^M$ teilt. Der erste Teilstrahl $S_1^R$ verläuft zu einem dritten Strahlteiler 30 und interferiert dort mit dem zweiten Strahl $S_2$, so dass der erste Strahl $S_1$ und der zweite Strahl $S_2$ miteinander interferieren und ein Schwebungssignal entsteht. Das Schwebungssignal wird von einem Lichtstrahl 32 getragen, der auf ein optisches Gitter 34 fällt.

Das optische Gitter 34 führt zu einer Aufteilung des Lichtstrahls 32 und damit des Schwebungssignals in mehrere Frequenzintervalle $I_1$, $I_2$, $I_3$. Das Licht des ersten Frequenzintervalls $I_1$ fällt auf ein erstes Detektorelement 36.1, das Licht des zweiten Frequenzintervalls $I_2$ auf ein zweites Detektorelement 36.2 und das Licht des dritten Frequenzintervalls $I_3$ auf ein drittes Detektorelement 36.3. Die Detektorelemente 36.1, 36.2, 36.3 sind Teil eines Referenzdetektors 38.

Der Referenzdetektor 38 wandelt das auftreffende Licht in einen elektrischen Strom, so dass das Schwebungssignal nun von dem elektrischen Strom getragen wird. Über eine elektrische Leitung 40 ist der Referenzdetektor 38 mit einem ersten Bandpass 42, einem zweiten Bandpass 44 und einem dritten Bandpass 46 verbunden. Der erste Bandpass 42 hat eine Passfrequenz von 10 MHz, der zweite Bandpass 44 von 90 MHz und der dritte Bandpass 46 von 110 MHz. Die Auswertungen der elektrischen Signale hinter den Bandpassfiltern 42, 44, 46 sind gleich, so dass lediglich auf die Verschaltung hinter dem ersten Bandpass 42 eingegangen wird.

Hinter dem ersten Bandpass 42 wird das elektrische Signal auf einen ersten Mischer 48 geleitet, ein zweiter Anteil gelangt über einen 90°-Phasenschieber 50 zu einem zweiten Mischer 52. Der erste Mischer 48 und der zweite Mischer 52 erhalten auf ihren jeweiligen zweiten Eingängen ein elektrisches Signal aus einem weiter unten beschriebenen vierten Bandpass 54.

Der Teilstrahl $S_1^M$ gelangt über einen vierten Strahlteiler 56 und ein Viertelwellenplättchen 57 zur Messstrecke 18. Der nach Reflexion am Retroreflektor 20 zurücklaufende Teilstrahl $S_1^M$ gelangt über den vierten Strahlteiler 56 zu einem fünften Strahlteiler 58 und wird dort mit dem zweiten Strahl $S_2$ zur Interferenz gebracht. Es entsteht ein zweites Schwebungssignal, das von einem zweiten Lichtstrahl 60 getragen wird.

Der zweite Lichtstrahl 60 fällt auf ein zweites Gitter 62, das wie das erste Gitter 34 das einfallende Licht auf Detektorelemente 64.1, 64.2, 64.3 leitet und so eine Aufteilung des Schwebungssignals in Frequenzintervalle herbeiführt. Die Detektorelemente 64 (Bezugszeichen ohne Zählsuffix bezeichnen das Objekt als solches) sind Teil eines Messdetektors 66, der aus dem einfallenden zweiten Lichtstrahl 60 ein elektrisches Signal erzeugt.

Das von diesem elektrischen Signal getragene Schwebungssignal wird auf Bandpassfilter 54, 68, 70 geleitet. Der vierte Bandpass 54 hat eine Passfrequenz von 10 MHz, so dass am ersten Mischer 48 ein elektrisches Signal anliegt, das nach Durchlauf durch einen Tiefpass 72 ein Signal liefert, das proportional zu $\cos\varphi_{10MHz}$ ist. Der zweite Mischer 52 liefert ein Signal, das nach Durchgang durch einen zweiten Tiefpass 74 zu $\sin\varphi_{10MHz}$ - proportional ist. Aus diesen beiden Signalen kann die Phasenlage der virtuellen 10 MHz-Frequenz berechnet werden.

Das Heruntermischen der üblichen Frequenzen, die von den Bandpässen 44, 46, 68, 70 kommen, wird nicht beschrieben, da es ein Standardverfahren ist. Aus den so erhaltenen elektrischen Messwerten wird wie oben beschrieben eine Länge L der Messstrecke 18 berechnet.

Figur 1 zeigt zudem schematisch ein optisches Absolutlängenmessgerät, mit dem die Messstrecke 18 mit einer Genauigkeit bestimmt werden kann, die kleiner ist als ein Viertel der Wellenlänge der längsten zur Auswertung herangezogenen synthetischen Wellenlänge. So kann die Absolut-Längenmessvorrichtung 10 die Länge L vollkommen ohne Vorwissen über die Länge L messen.

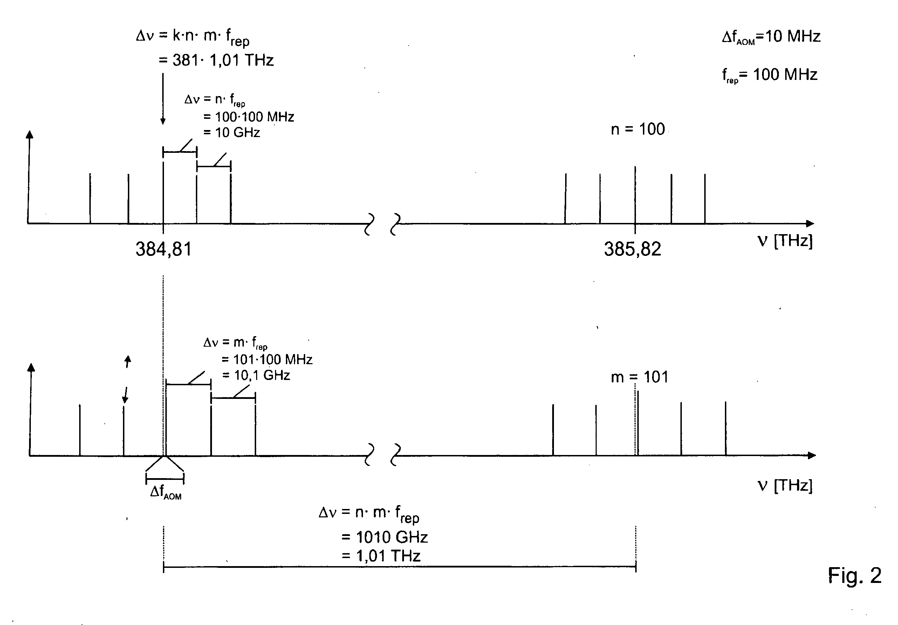

Figur 2 zeigt schematisch das Spektrum des ersten Strahls $S_1$ (oberes Teilbild) und des zweiten Strahls $S_2$ (unteres Teilbild). Es ist zu erkennen, dass sich das Frequenzmuster des ersten Strahls in einem Frequenzabstand von $k * n * m * f_{rep}$ wiederholt, was im vorliegenden Fall 1,01 THz ist.

**Bezugszeichenliste**

| | | | |
|---|---|---|---|
| 10 | Absolut-Längenmessvorrichtung | 60 | zweiter Lichtstrahl |
| | | 62 | zweites Gitter |
| | | 64 | Detektorelement |
| 12 | Lichtquelle | 66 | Messdetektor |
| 14 | Frequenzversatz-Erzeugungsvorrichtung | 68 | fünfter Bandpass |
| 16 | akusto-optischer Modulator | 70 | sechster Bandpass |
| 18 | Messstrecke | 72 | Tiefpass |
| | | 74 | zweiter Tiefpass |
| 20 | Retroreflektor | 76 | nicht-optisches Absolutlän-genmessgerät |
| 22 | Frequenzkammlaser | | |
| 24 | Strahlleiter | | |
| 26 | Frequenzkamm-Filtervorrichtung | $S_1$ | erster Strahl |
| | | $S_2$ | zweiter Strahl |
| 28 | zweiter Strahlteiler | So | Primärstrahl |
| | | $S_1^R$ | Teilstrahl |
| 30 | dritter Strahlteiler | $S_1^M$ | Teilstrahl |
| 32 | Lichtstrahl | | |

(fortgesetzt)

| 34 | Gitter | c | Vakuumlichtgeschwindigkeit |
|---|---|---|---|
| 36 | Detektorelement | $\Delta f$ | Frequenzabstand |
| 38 | Referenzdetektor | $\Delta f_{AOM}$ | Frequenzversatz |
| | | $f_{rep}$ | Repetitionsfrequenz |
| 40 | elektrische Leitung | $f_{CEO}$ | Einhüllendenfrequenzversatz (*carrier envelope frequency offset*) |
| 42 | erster Bandpass | | |
| 44 | zweiter Bandpass | | |
| 46 | dritter Bandpass | $f_{cav,1}$ | Resonanzfrequenz des ersten Etalons |
| 48 | erster Mischer | | |
| | | $f_{cav,2}$ | Resonanzfrequenz des zwei-ten Etalons |
| 50 | 90°-Phasenschieber | | |
| 52 | zweiter Mischer | $f_{Schweb}$ | Frequenz der Schwebung |
| 54 | vierter Bandpass | | |
| 56 | vierter Strahlleiter | | |
| 57 | Viertelwellenplättchen | | |
| 58 | fünfter Strahlleiter | | |
| j | Unterscheidungsindex | | |
| | $j = 1 \rightarrow$ Strahl 1 | | |
| | $j = 2 \rightarrow$ Strahl 2 | | |
| $k_1$ | Zählindex $k_1 = 0, 1, 2, ...$ | | |
| $k_2$ | Zählindex $k_2 = 0, 1, 2, ...$ | | |
| L | Messstreckenlänge | | |
| n,m | natürliche Zahlen, teilerfremd | | |
| N | Menge der natürlichen Zahlen | | |
| N | Interpolationsgenauigkeit (auf 1/N der synth. Wellenlänge) | | |
| q | Zählindex $q = 0, 1, 2, ...$ | | |
| r | Kammlinienindex (Zählindex) | | |
| $\alpha$ | erste Frequenz bei der Bestimmung einer synth. Freq. | | |
| $\beta$ | zweite Frequenz bei der Bestimmung einer synth. Freq. | | |
| $\varepsilon$ | Permittivität des Mediums | | |
| $\varepsilon_0$ | Dielektrizitätskonstante | | |
| $\kappa$ | Ordnung, natürliche Zahl (Formel 58) | | |
| $\nu_{S1}$ | Frequenz des ersten Strahls | | |
| $\nu_{S2}$ | Frequenz des zweiten Strahls | | |

**Patentansprüche**

1. Verfahren zur Längenmessung, insbesondere zur absoluten Längenmessung, mit den Schritten:

(a) Erzeugen eines Frequenzkamms, der als aus einer Mehrzahl äquidistanter Kammlinien bestehend beschreibbar ist, danach
(b) Herausfiltern jeder n-ten Kammlinie aus dem Frequenzkamm, so dass ein erster Strahl ($S_1$) entsteht, und
(c) Herausfiltern jeder m-ten Kammlinie aus dem Frequenzkamm, so dass ein zweiter Strahl ($S_2$) entsteht,
(d) Erzeugen eines von null verschiedenen Frequenzversatzes ($\Delta f_{AOM}$) zwischen beiden Strahlen ($S_1$, $S_2$),

(e) Senden zumindest eines Teils $S_1^M$, zumindest eines der Strahlen ($S_1$) auf eine Messstrecke, danach

(f) Interferieren-Lassen des ersten Strahls und des zweiten Strahls, so dass mindestens ein Schwebungssignal entsteht, und

(g) Berechnen der absoluten Länge aus dem mindestens einen Schwebungssignal.

2. Verfahren nach Anspruch 1, **dadurch gekennzeichnet, dass** eine Repetitionsfrequenz ($f_{rep}$), um die die Kammlinien äquidistant beabstandet sind, mehr als doppelt so groß ist wie der Frequenzversatz ($\Delta f_{AOM}$).

3. Verfahren nach einem der vorstehenden Ansprüche, **gekennzeichnet durch** den Schritt:

(f2) Aufteilen des *mindestens einen* Schwebungssignals in ein erstes Frequenzintervall ($I_1$) und zumindest ein zweites Frequenzintervall ($I_2$),
so dass gilt, dass das erste Frequenzintervall ($I_1$) **durch** Hinzuaddieren eines festen Frequenzabstands ($\Delta f$) in das zweite Frequenzintervall ($I_2$) überführbar ist.

4. Verfahren nach Anspruch 3, **dadurch gekennzeichnet, dass** der Frequenzabstand ($\Delta f$) zumindest 500 GHz beträgt.

5. Verfahren nach Anspruch 3 oder 4, **dadurch gekennzeichnet, dass**

- n und m so gewählt sind, dass der Betrag der Differenz von n und m höchstens ein Zehntel des Minimums von n und m beträgt und
- das Schwebungssignal tiefpassgefiltert wird.

6. Verfahren nach einem der vorstehenden Ansprüche, **dadurch gekennzeichnet, dass** der Frequenzkamm mittels eines Femtosekundenlasers (22) hergestellt wird.

7. Absolut-Längenmessvorrichtung (10), mit

(a) einer Lichtquelle (12) zum Erzeugen eines ersten Strahls ($S_1$) und zumindest eines zweiten Strahls ($S_2$),
(b) einer Frequenzversatz-Erzeugungsvorrichtung (14) zum Erzeugen eines von null verschiedenen Frequenzversatzes ($\Delta f_{AOM}$) zwischen beiden Strahlen ($S_1$, $S_2$),

(c) einer Messstrecke (18), in der im Betrieb zumindest ein Teil $S_1^M$ zumindest eines der Strahlen ($S_1$) läuft, und

(d) zumindest einem Detektor, der so angeordnet ist, dass auf ihm der erste Strahl ($S_1$) und der zweite Strahl ($S_2$) interferieren, so dass ein Schwebungssignal entsteht, anhand dessen eine absolute Länge der Messstrecke (L) ermittelbar ist,
**dadurch gekennzeichnet, dass**
(e) die Lichtquelle (12)

(i) eine Frequenzkammerzeugungsvorrichtung (22) zum Abgeben eines Frequenzkamms, der als aus einer Mehrzahl äquidistanter Kammlinien bestehend beschreibbar ist,
(ii) eine erste Frequenzkamm-Filtervorrichtung (26.1) zum Herausfiltern jeder n-ten Kammlinie aus dem Frequenzkamm, so dass ein erster Strahl ($S_1$) entsteht, und
(iii) eine zweite Frequenzkamm-Filtervorrichtung (26.2) zum Herausfiltern jeder m-ten Kammlinie aus dem Frequenzkamm, so dass ein zweiter Strahl ($S_2$) entsteht,

umfasst.

8. Absolut-Längenmessvorrichtung (10) nach Anspruch 7, **gekennzeichnet durch** eine elektrische Auswerteeinheit, die eingerichtet ist zum Berechnen der absoluten Länge aus den Schwebungssignalen.

9. Absolut-Längenmessvorrichtung (10) nach Anspruch 7 oder 8, **dadurch gekennzeichnet, dass** die erste Messstrekke (18) Teil eines Heterodyn-Interferometers ist.

**10.** Absolut-Längenmessvorrichtung (10) nach einem der Ansprüche 7 bis 9, **gekennzeichnet durch** ein nicht-interferometrisches Absolut-Längenmessgerät (76), dessen Messgenauigkeit insbesondere unterhalb eines Viertels der größten synthetischen Wellenlänge liegt.

**Claims**

**1.** A method for length measurement, in particular for absolute length measurement, with the following steps:

(a) Producing a frequency comb, which can be described as consisting of a majority of equidistant comb lines, and then
(b) filtering each nth comb line from the frequency comb, such that a first beam ($S_1$) is formed, and
(c) filtering each mth comb line from the frequency comb, such that a second beam ($S_2$) is formed,
(d) producing a frequency offset at a value other than zero ($\Delta f_{AOM}$) between both beams ($S_1$, $S_2$),

(e) sending at least one part $S_1^M$ of at least one of the beams ($S_1$) upon a measuring section, and then
(f) facilitating the interference between the first beam and the second beam, such that at least one beat signal is formed, and
(g) calculating the absolute length from at least one beat signal.

**2.** The method according to claim 1, **characterised by** the fact that a repetition frequency ($f_{rap}$), around which the comb lines are equidistantly spaced, is more than twice as large as the frequency offset ($\Delta f_{AOM}$).

**3.** The method according to one of the above-mentioned claims, **characterised by** the following step:

(f2) dividing *at least one* beat signal in the first frequency interval ($I_1$) and at least one second frequency interval ($I_2$),
such that the first frequency interval ($I_1$) is transferable to the second frequency interval ($I_2$) by means of the addition of a fixed frequency spacing ($\Delta f$).

**4.** The method according to claim 3, **characterised by** the fact that the frequency spacing ($\Delta f$) amounts to at least 500 GHz.

**5.** The method according to claims 3 or 4, **characterised by** the fact that

- n and m are selected such that the absolute value of the difference between n and m amounts to no more than one tenth of the minimum value of n and m and
- the beat signal is low-pass filtered.

**6.** The method according to one of the above-mentioned claims, **characterised by** the fact that the frequency comb is produced by means of a femtosecond laser (22).

**7.** An absolute length measuring device (10), with

(a) of a source of light (12) for the producing of a first beam ($S_1$) and at least one second beam ($S_2$),
(b) a frequency offset generating device (14) for the generating of a frequency offset at a value other than zero ($\Delta f_{AOM}$) between both beams ($S_1$, $S_2$),

(c) of a measuring section (18), in which at least one part $S_1^M$ of at least one of the beams ($S_1$) runs during operation, and
(d) at least one detector, which is set up such that the first beam ($S_1$) and the second beam ($S_2$) interfere upon it, such that a beat signal is formed, on the basis of which the absolute length of the measuring section (L) can be determined, is **characterised by** the fact that
(e) the source of light (12) includes

(i) a frequency comb generating device (22) for the emitting of a frequency comb, which can be described as consisting of a majority of equidistant comb lines,
(ii) a first frequency comb filtering device (26.1) for the filtering of each nth comb line from the frequency comb, such that a first beam ($S_1$) is formed, and
(iii) a second frequency comb filtering device (26.2) for the filtering of every mth comb line from the frequency comb, such that a second beam ($S_2$) is formed.

8.  The absolute length measuring device (10) according to claim 7, **characterised by** an electrical evaluation unit which is set up to calculate the absolute length from the beat signals.

9.  The absolute length measuring device (10) according to claims 7 or 8, **characterised by** the fact that the first measuring section (18) is part of a heterodyne interferometer.

10. The absolute length measurement device (10) according to claims 7 to 9, **characterised by** a non-interferometric absolute length measurement apparatus (76), whose measurement accuracy is preferably below one quarter of the largest synthetic wavelength.

**Revendications**

1.  Procédé pour la mesure de longueurs, en particulier pour la mesure de longueurs absolues, comprenant les étapes consistant à :

    a) générer un peigne de fréquences, qui peut être décrit comme constitué d'une pluralité de lignes de peigne équidistantes, ensuite
    b) supprimer par filtrage chaque n-ième ligne de peigne hors du peigne de fréquences, de sorte qu'il apparaît un premier rayon ($S_1$), et
    c) supprimer par filtrage chaque m-ième ligne de peigne hors du peigne de fréquences, de sorte qu'il apparaît un second rayon ($S_2$),
    d) engendrer un décalage de fréquence ($\Delta f_{AOM}$) différent de zéro entre les deux rayons ($S_1$, $S_2$),
    e) envoyer au moins une partie ($S_1^M$) de l'un au moins des rayons ($S_1$) sur un trajet de mesure, et ensuite
    f) faire interférer le premier rayon et le second rayon, de sorte qu'il apparaît au moins un signal de abattement, et
    g) calculer la longueur absolue à partir dudit au moins un signal de battement.

2.  Procédé selon la revendication 1, **caractérisé en ce qu'**une fréquence de répétition ($f_{rep}$), à raison de laquelle les lignes de peigne sont écartées de façon équidistante, est plus que deux fois plus élevée que le décalage de fréquence ($\Delta f_{AOM}$).

3.  Procédé selon l'une des revendications précédentes, **caractérisé par** l'étape consistant à :

    f2) subdiviser ledit au moins un signal de battement en un premier intervalle de fréquence ($I_1$) et au moins un second intervalle de fréquence ($I_2$),
    de sorte que le premier intervalle de fréquence ($I_1$) est susceptible d'être transformé dans le second intervalle de fréquence ($I_2$) par addition d'un écart de fréquence fixe ($\Delta f$).

4.  Procédé selon la revendication 3, **caractérisé en ce que** l'écart de fréquence ($\Delta f$) s'élève à au moins 500 GHz.

5.  Procédé selon la revendication 3 ou 4, **caractérisé en ce que**

    - n et m sont ainsi choisis que la valeur de la différence de n et m s'élève au maximum à 1/10 du minimum de n et m, et
    - le signal de battement est filtré par un filtre passe-bas.

6.  Procédé selon l'une des revendications précédentes, **caractérisé en ce que** le peigne de fréquence est réalisé au moyen d'un laser (22) à femtoseconde.

7.  Dispositif de mesure de longueurs absolues (10), comprenant

a) une source de lumière (12) pour engendrer un premier rayon ($S_1$) et au moins un second rayon ($S_2$),

b) un dispositif de génération de décalage de fréquence (14) pour engendrer un décalage de fréquence ($\Delta f_{AOM}$) différent de zéro entre les deux rayons ($S_1$, $S_2$),

c) un trajet de mesure (18) dans lequel passe en fonctionnement au moins une partie ($S_1{}^M$) de l'un au moins des rayons ($S_1$), et

d) au moins un détecteur qui est agencé de telle façon que le premier rayon (S1) et le second rayon (S2) interfèrent sur celui-ci, de sorte qu'il en résulte un signal de battement au moyen duquel une position absolue du trajet de mesure (L) est susceptible d'être déterminée,

**caractérisé en ce que**

e) la source de lumière (12)

(i) comprend un dispositif de génération de peigne de fréquence (22) pour délivrer un peigne de fréquence qui peut être décrit comme constitué d'une pluralité de lignes de peigne équidistantes.

(ii) un premier dispositif de filtrage de peigne de fréquence (26.1) pour supprimer par filtrage chaque n-ième ligne de peigne hors du peigne de fréquence, de sorte qu'il apparaît un premier rayon ($S_1$), et

(iii) un second dispositif de filtrage de peigne à fréquence (26.2) pour supprimer par filtrage chaque m-ième ligne de peigne hors du peigne de fréquence, de sorte qu'il apparaît un second rayon ($S_2$).

8. Dispositif de mesure de longueurs absolues (10) selon la revendication 7, **caractérisé par** une unité d'évaluation électrique, qui est conçue pour calculer la longueur absolue à partir des signaux de battement.

9. Dispositif de mesure de longueurs absolues (10) selon la revendication 7 ou 9, **caractérisé en ce que** le premier trajet de mesure (18) fait partie d'un interféromètre hétérodyne.

10. Dispositif de mesure de longueurs absolues (10) selon l'une des revendications 7 à 9, **caractérisé par** un appareil de mesure de longueur absolue (76) non interférométrique, dont la précision de mesure est en particulier située au-dessous d'un quart de la plus grande longueur d'onde synthétique.

Fig. 1

EP 2 620 742 B1

$\Delta\nu = k \cdot n \cdot m \cdot f_{rep}$
$= 381 \cdot 1,01\ THz$

$\Delta f_{AOM} = 10\ MHz$

$f_{rep} = 100\ MHz$

$\Delta\nu = n \cdot f_{rep}$
$= 100 \cdot 100\ MHz$
$= 10\ GHz$

n = 100

384,81

385,82

ν [THz]

$\Delta\nu = m \cdot f_{rep}$
$= 101 \cdot 100\ MHz$
$= 10,1\ GHz$

m = 101

$\Delta f_{AOM}$

ν [THz]

$\Delta\nu = n \cdot m \cdot f_{rep}$
$= 1010\ GHz$
$= 1,01\ THz$

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON CODDINGTON et al.** Rapid and precise absolute distance measurements at long range. *Nature Photonics,* Juni 2009, vol. 3

- **VON YOKOYAMA et al.** A distance meter using a terahertz intermode beat in an optical frequency comb. *Optics Express,* 28. September 2009, vol. 17 (20